# EUROPEAN PATENT SPECIFICATION

(11) **EP 2 166 766 B1**
(45) Date of publication and mention of the grant of the patent: **18.05.2016**
(21) Application number: 08425609.8
(22) Date of filing: 18.09.2008
(51) Int. Cl.: H04N 7/18, B60R 1/00, H01L 27/146, H04N 5/225

(54) **On-board system for auxillary viewing of the surroundings of a vehicle**
Bordsystem zur Unterstützung der Sicht der Fahrzeugumgebung
Système embarqué pour la visualisation auxiliaire des alentours d'un véhicule

(43) Date of publication of application: 24.03.2010
(73) Proprietor: Magneti Marelli S.p.A., 20011 Corbetta (MI) (IT)
(72) Inventor: Ghisio, Guido, 10078 Venaria (Torino) (IT); Calvi, Giorgio, 10078 Venaria (Torino) (IT); Bollea, Denis, 10078 Venaria (Torino) (IT); Monchiero, Gianluca, 10078 Venaria (Torino) (IT)
(74) Representative: Deambrogi, Edgardo

(56) References cited:
- EP-A- 0 825 064
- EP-A- 1 617 655
- EP-A2- 1 051 026
- WO-A-03/107436
- DE-A1-102005 050 609
- JP-A- 2004 134 875
- US-A1- 2004 056 955
- US-A1- 2004 142 539
- US-B1- 6 473 001
- US-B1- 6 476 855

## Description

The present invention relates in general to assistance systems for driving a vehicle, and more specifically to a system for auxiliary viewing of the surroundings of a vehicle, adapted to simultaneously monitor a plurality of areas of observation, in particular for shooting scenes in significant directions of observation hidden from the view of the driver under normal driving or manoeuvring conditions.

Systems for monitoring the surroundings of a vehicle are known in the art which assist a driver under driving conditions, for example for monitoring a field of view to the side or to the rear of the vehicle (so-called blind spot), or when manoeuvring, for example for monitoring a forward or rearward lateral field of view in relation to the possibility of observation by the driver, when approaching blind T-junctions or entering a road from parking places or driveways of buildings.

Typically, such systems adopt one or two mirror-image shooting devices, oriented in opposite directions, and placed at the front or rear of the vehicle, in the furthest forward or rearward position possible in view of the shape of the vehicle, for example, and typically, positioned at the extreme margins of the shape of the vehicle or grouped at the middle section of the bumper, the radiator grille or the bonnet or boot in order to anticipate the visibility of the areas to the side of the vehicle which are hidden from the driver's view.

EP 1 640 212 A1 describes a system for surveying the environs of a vehicle, comprising a plurality of shooting devices (video cameras) installed on the vehicle, adapted to allow the driver to monitor simultaneously several directions around the vehicle. The images coming from the video cameras are fused into a single synthesised image which is displayed on board for the benefit of the driver. In order so to do, a distributed approach has been adopted, in which each video camera shoots the images of its field of view and transmits them via dedicated cables to a processing and remote control centre, positioned in the dashboard or in the engine compartment, which is arranged for the processing of the images, the composition, starting therefrom, of a synthesised image, and its transmission, via corresponding cabling, to the on-board instrument panel where a display device accessible to the driver is housed.

The synthesised image is formed by the juxtaposition or partial superposition and stitching of the entire images taken by the two video cameras, through the processing of the boundary regions of the images in order to ensure continuity of the scene in the synthesised image, which presents the driver with a wide field of observation, for example, and preferably, of the order of 180 degrees. The distributed arrangement of the components of the system results in significant costs through duplication of the shooting apparatuses, transmission of the image signals from the latter to the processing unit, and then to the monitor available to the driver, and complexity of the algorithms for processing the images, in addition to the need for accurate installation and calibration of the video cameras. All this gives rise to high costs for the system and, finally, reduced reliability of installation on the vehicle.

US 2004/056955 discloses a monitoring device for a motor vehicle comprising two cameras adapted to take images of two different scenes around the vehicle for displaying onboard to the driver, wherein the full image from the left-hand camera is displayed in the left half of the display and the full image from the right-hand camera is displayed in the right half of the display.

DE 10 2005 050 609 discloses a system for monitoring the scene around a vehicle, where a left and a right image of areas in the left and right direction of a vehicle are received and stored in respective frame memory units. On the basis of road attribute information, a display ratio of the left and right image is selected, and the left and right images are displayed in juxtaposed fashion in the selected ratio on a display unit.

EP 1 051 026 relates to a multi-sensors system that has the analog output signals from one or more sensors synchronized and displayed on various quadrants of a television monitor, such that the signals can be combined and provided to the monitor without requiring the signals to be converted to digital values for processing.

JP 2004 134875 discloses an optical module provided with a pair of optical chips and related optical systems for acquiring images from opposite directions of view.

According to an alternative technique, claimed for example in EP 1 145 906 A2 and US 6 046 766 A, a solution to the duplication of the shooting devices and to the complexity of the image-processing algorithms lies in the use of an optical system capable of gathering the incident luminous beams from different areas of observation, possibly contiguous, and modifying their direction for concentration on respective different areas of a single image-sensing device. A typical optical system used for these purposes comprises, for example, a prism or an arrangement of mirrors and optional focussing lenses. Thus the composite image which it is wished to present to the driver is formed directly, without burdensome processing for the composition of a plurality of complete images obtained separately into a single synthesised image.
As a disadvantage, such a solution means that the portion of the sensing device dedicated to the viewing of an area of observation (for example, the right-hand side of the vehicle) may be influenced by inhomogeneous lighting conditions, such as dazzle (due to sources of intense light, for example vehicle headlights or direct sunlight) present in another area of observation. In this way, since the sole sensing device must adapt its own gain to the average lighting conditions, it is possible to obtain a composition of images which is in part overexposed or saturated and in part underexposed or dark.
This solution introduces phenomena of overestimation or underestimation of the calibration parameters of the gain of the sensor, which is not capable of simultaneously compensating the images coming from two different directions, with the effect of having an area of the image exposed too much or too little, therefore unable to be perceived clearly and efficaciously by the driver.

This system, if placed in a position at the front of the vehicle, is moreover subject to undesired dazzle effects due to the frontal illumination of the vehicle which, if not controlled by mechanical stratagems and through the introduction of calibrated filters, may prejudice its correct functioning.

The aim of the present invention is therefore to provide a satisfactory solution to the problems disclosed above, i.e. to provide an on-board auxiliary viewing system for a vehicle, adapted to simultaneously monitor a plurality of areas of observation, and which is simple and economic to produce, with a minimum number of components and cabling and reduced computing tasks, reliable and robust, and which does not require mechanical calibration under operating conditions, but at the same time introduces improvements in the fields of view and in the observation conditions compared with the prior art, and allows the possibility of independent regulation of the shooting parameters in the different areas of observation.

According to the present invention, this aim is achieved by means of a viewing system having the characteristics claimed in claim 1.

Particular embodiments are the subject of the dependent claims, the content of which is to be understood as an integral or integrating part of the present description.

In short, the present invention is based on the principle of providing an on-board system for shooting and simultaneously presenting to the driver at least two areas of observation around a vehicle, having a number of image sensing devices equal to the number of areas of observation monitored (typically two), integrated with a common processing unit for generating a composite image for presentation of the scenes shot to the driver of the vehicle, wherein the composite image is generated by the juxtaposition of portions of the images gathered by the sensors, the image signals being selectively acquired by the processing unit from predetermined selected areas of the sensors, adopting a procedure of switching (multiplexing) between the picking up image elements (pixels) of the sensors in the formation of the display image elements (pixels).

Advantageously, the arrangement of the components of the system is concentrated on a single circuit module, provided on a printed circuit board configured and arranged for receiving both the image sensing devices and the processing electronics, and placed in an advanced position at the front or the rear of the vehicle, at the middle section, respectively for observation of lateral areas at front or rear.

In a preferred embodiment, the sensor devices are two in number, disposed symmetrically on opposite sides of the printed circuit board, and each of which is adapted to shoot a scene in a respective field of view of predetermined amplitude, and the processing unit is arranged for acquiring from each sensing device a half-image representing the portion of the scene shot in the part of the area of observation which is located in the most advanced position with respect to the position of the vehicle.

Further characteristics and advantages of the invention will be disclosed in more detail in the following detailed description of an embodiment thereof, provided by way of non-limiting example with reference to the appended drawings, in which:
Figure 1 is a general representation of the system of the invention, installed on a motor vehicle;
Figure 2 is a diagrammatic description of a forward viewing scenario in a vehicle equipped with a system according to the invention;
Figures 3 and 4 are perspective views, respectively exploded and in the assembled state, of a shooting arrangement of the system of the invention;
Figures 5 and 6 are pictorial representations of the images shot by the on-board shooting arrangement in the position of the vehicle shown in Figure 5;
Figure 7 is a graphic representation of the process of scanning the pixels of an image shot by an on-board shooting device;
Figure 8 is a diagrammatic representation of the processing of a composite image obtained by the juxtaposition of portions of the images gathered by two on-board shooting devices;
Figure 9 is an exemplary block circuit diagram of the image processing unit of the system of the invention;
Figure 10 is a pictorial representation of a composite image obtained according to the process of Figure 8; and
Figures 11 and 12 are respectively a diagrammatic representation of an optimised shooting arrangement and of its installation on board a vehicle.

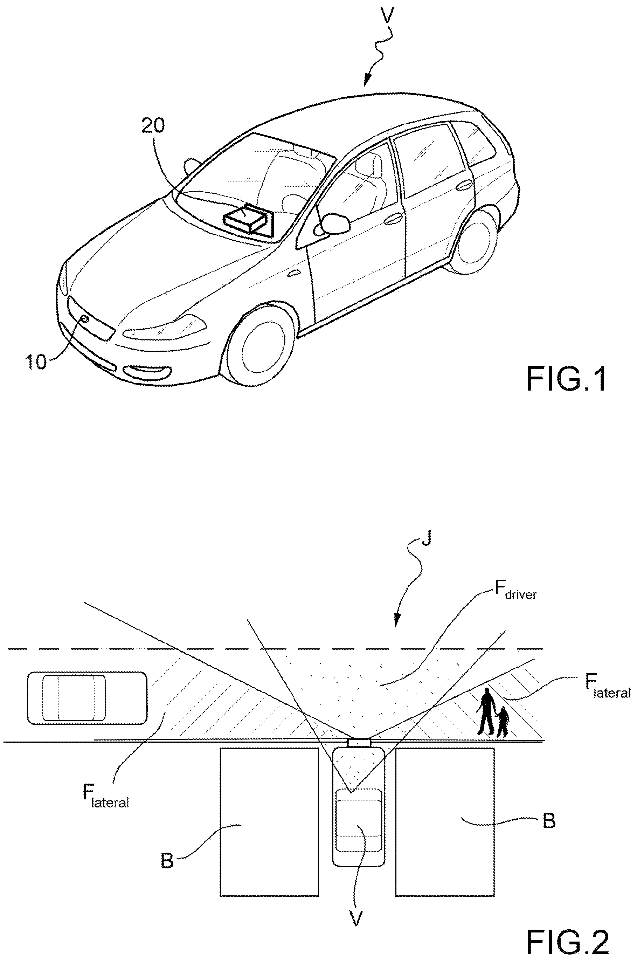

Figure 1 shows, in its installation on a vehicle, an on-board system for auxiliary viewing of the surroundings of a vehicle, according to a preferred embodiment for simultaneously monitoring two lateral areas of observation ahead of the vehicle in opposed directions, typically hidden from the view of the driver under normal driving or manoeuvring conditions.

Such a system for shooting scenes and simultaneously presenting them to the driver comprises a pair of image sensing devices integrated with a common processing unit in a shooting arrangement 10 typically installed in a front forward position of the vehicle, for example, as shown, in proximity to the front bumper. The arrangement 10 is arranged to shoot simultaneously two different scenes in opposed lateral areas of observation and to generate a composite image adapted to be presented to the driver of the vehicle via display means 20 provided in the vehicle interior, for example the screen of a navigation information system (NTSC compatible) or the display of an on-board panel.

Figure 2 shows the forward visual scenario obtainable in a vehicle V equipped with a system described and which is approaching a junction J. In the circumstances shown, the vehicle V is coming from a section of road or driveway surrounded by buildings B which conceal from the driver the view to the side of the vehicle, limiting perception thereof to the scenes comprised in the field of view F_{driver}. The detecting module 10 is instead adapted to shoot scenes in the lateral fields of view Fₗₐₜₑᵣₐₗ, completing the field of view F_{driver} to a field of view potentially extending to 180°, symmetrically with respect to the central axis of the vehicle, coinciding with its direction of advance.

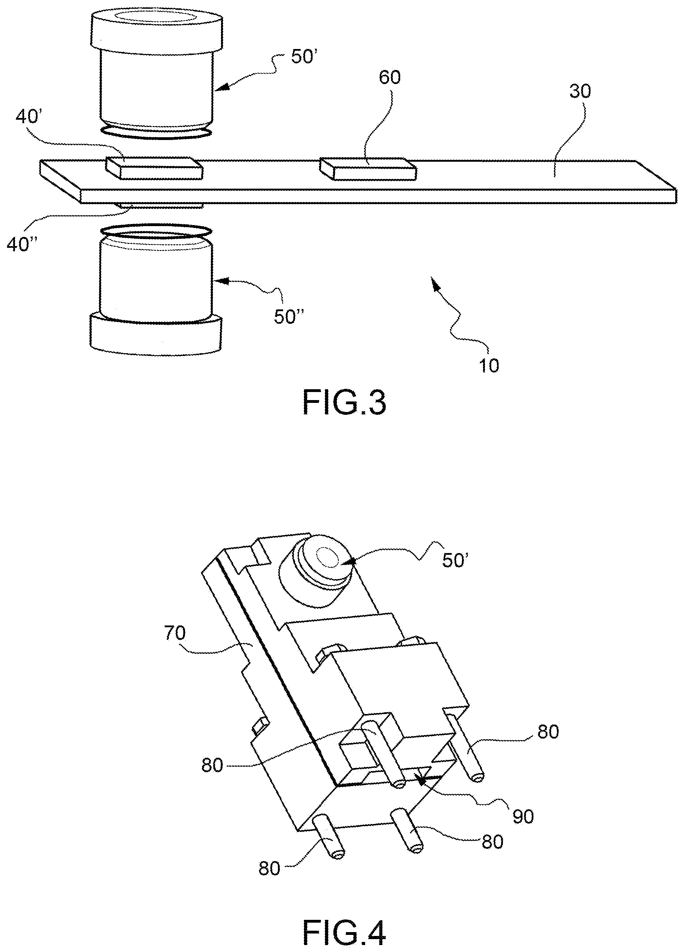

The shooting arrangement is shown in detail in Figures 3 and 4. It comprises a printed circuit board 30 having on opposite faces two image sensing devices 40', 40", for example produced by CCD or CMOS technology according to the prior art, and adapted to convert a respective optical beam incident thereon into a plurality of related electrical image signals corresponding to the minimum image elements (pixels). The image sensing devices are preferably disposed according to a coaxial orientation and in a symmetrical position with respect to the plane of the board 30, and associated with each of them there is a respective optical focussing system 50', 50" for concentrating the optical beams of images. Mounted on the same support 30 is an image processing module 60, electrically connected to the sensing devices 40', 40" and arranged to generate a composite image from selected electrical image signals emitted by the sensing devices and relating to an image portion of the scene shot.

The presence of two different optical focussing systems 50', 50" advantageously makes it possible to give different emphases to the view in the different areas of observation (for example, long distance view on the left-hand side of the vehicle and wide view on the right-hand side of the vehicle).

The assembly consisting of the printed circuit support 30 and the optical focussing systems 50', 50" is then enclosed and protected by a casing 70 resistant to mechanical stresses, provided with means 80 for fixing to a part of the vehicle and also with an outlet port 90 for cabling for the electrical coupling of the image processing module 60 to the display means 20 contained in the vehicle interior. The optical systems are anchored in the correct position with respect to the sensing devices mounted on the printed circuit, rendering any software or mechanical calibration of the system unnecessary.

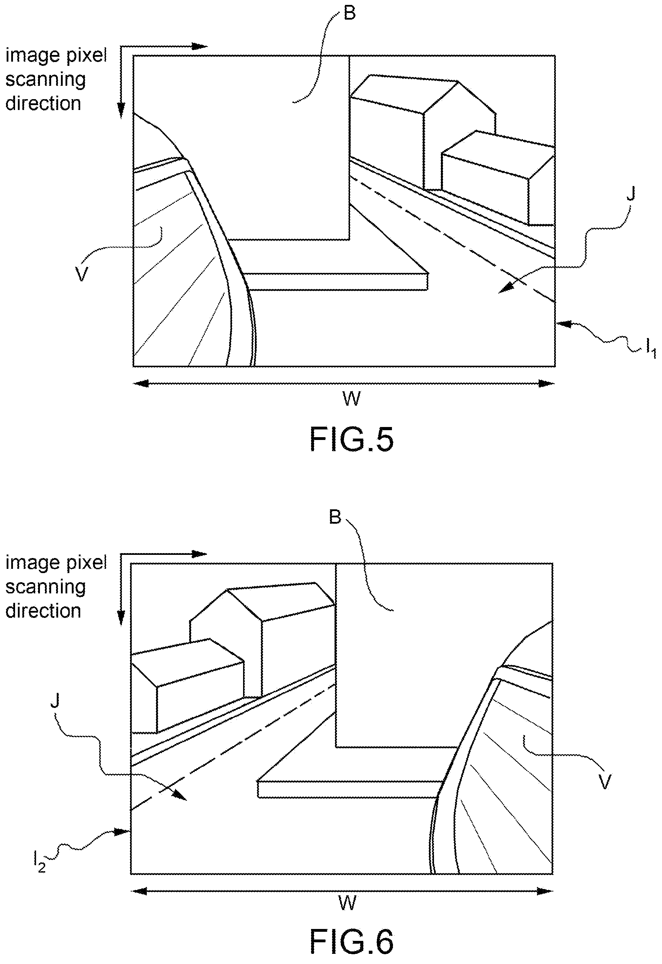

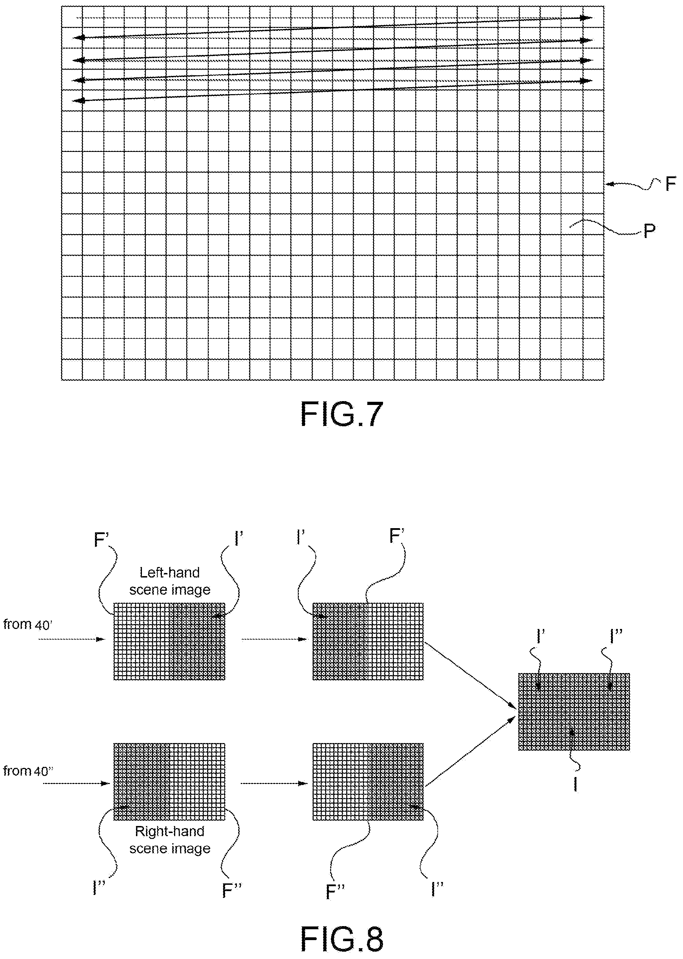

Figures 5 and 6 are pictorial representations of the images I₁ and I₂ shot by a shooting arrangement 10 in the position of the vehicle shown in Figure 2. In this, the letter "w" indicates the width of the image frame, typically expressed in the number of image elements or pixels, while the arrows at top left indicate the direction of scanning of the pixels of the images, which, as well known to a person skilled in the art, takes place column-by-column from right to left, line-by-line from top to bottom. A graphic indication of the process of scanning of the pixels P of an image frame F is further provided in Figure 7.

According to the invention, the generation of the composite image I by the processing module 60 is effected by juxtaposition of portions of the images I₁ and I₂ gathered by the sensing devices 40', 40", respectively indicated by I', I", and the corresponding process is shown in Figure 8.

The processing module 60 is arranged for selectively acquiring the image signals I', I" emitted by the respective sensing device 40', 40", i.e. for acquiring the image signals of the pixels belonging to predetermined selected areas of the sensing devices, by adopting a process of switching (multiplexing) between the image elements of the sensors in the formation of the composite image I.

Preferably, in the shooting arrangement described herein purely by way of example, the areas selected for the acquisition of the image signals I', I" correspond respectively to the right-hand or left-hand half of a complete image frame (F', F"), so as to represent the portion of scene shot in the part of the area of observation which is outermost with respect to the position of the vehicle (lateral and front parts of the vehicle if the device is installed at the front, or lateral and rear parts if the device is installed at the rear).

The fusion of the two images I', I" is effected by means of the synchronous management of the image sensing devices 40', 40" by the processing module 60, so as to carry out the function without requiring a complex logic.

In particular, the two sensors function in a synchronous/parallel mode, i.e. they are adapted to sample a pixel located in the same co-ordinate of the image frame F', F" at a given moment (each sensor takes a reading of the image starting from the pixel at top left, sweeping the whole frame line by line (Figure 7)).

A programmable logic circuit on board the processing module 60 is arranged to form the composite image I by acquiring the image signals I', I" from both the sensing devices, setting the co-ordinates of the scanning start and end pixels of the frame F', F" of each sensing device. The position at which the image signals of the pixels acquired by the sensing devices 40', 40" are represented on the composite image is controlled by means of configuration of registers within the module 60, such as to obtain the translation of the partial image frames equal to exactly half the number of pixels which compose a line, so that the part involved in the display is placed in the correct position of juxtaposition of the images to facilitate the perception and true orientation of the scenes shot on the part of the driver.

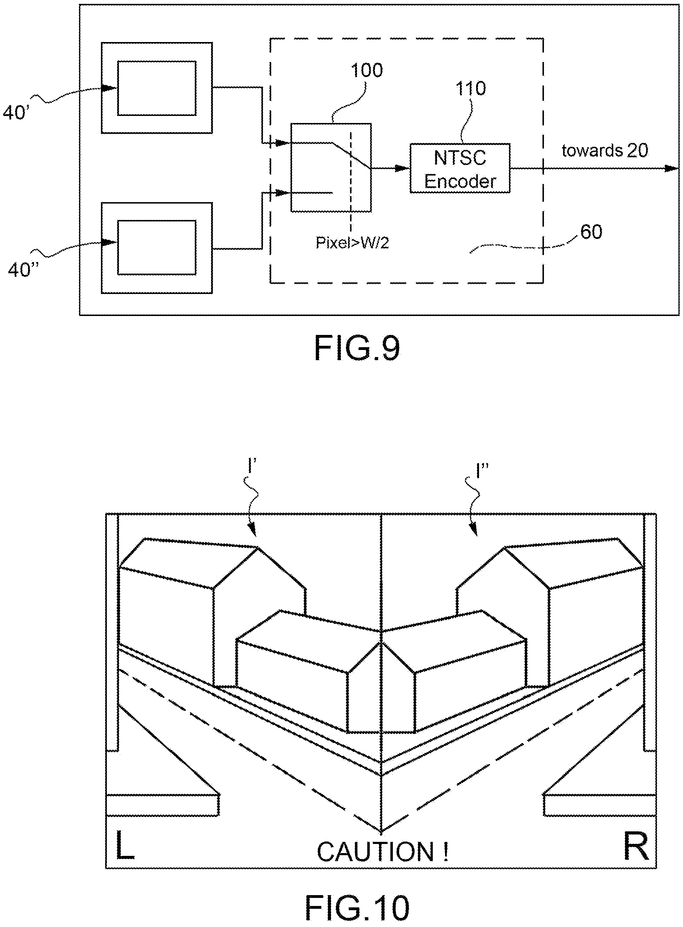

From a conceptual point of view, the logic described above realizes a video multiplexer circuit 100 of the type shown in Figure 9, where the switching threshold is equal to the attainment of the median co-ordinate (w/2) of each frame line in the course of scanning the pixels, downstream of which is disposed a coding module 110 according to the video format selected for presentation to the driver, in this example NTSC.

In this way, the correct fusion of the two images is obtained without the need to store the complete frames F' and F" and carry out more burdensome subsequent video processing, with the advantage of reducing the complexity of the electronic circuits for acquiring the images and computing.

Moreover, the processing module 60 is arranged for displaying a graphic superposition defmable by the user with regard to inscription, its appearance and colour, indicating warnings or recommendations and/or the directions of provenance of the images. This avoids having to have recourse to the functionality, sometimes limited, of the display means in the vehicle interior on which the image is finally presented to the driver.

Conveniently, the arrangement of two sensing devices that are independent from the physical point of view but managed by the same computing intelligence, permits the independent management of the functions of AGC (Automatic Gain Control) and AEC (Automatic Exposure Control). This proves extremely useful in situations in which one of the two sides of the module (and therefore of the vehicle) is exposed to sources of light intensity different from the other. A typical example in which such circumstances could occur may be the case of night driving in the manoeuvre of approaching and entering a road junction in which from one direction a vehicle is coming with its headlights on and from the opposite direction a pedestrian is coming. On this occasion the use of a single sensing device would prejudice the automatic gain function which, by having to compensate for the overexposure of part of the sensor, would reduce the light intensity of the other part, with the consequence of making half of the image scarcely clear, therefore scarcely perceptible (and, finally, not useful for the intended purpose of driving assistance). The pedestrian in this case would be poorly visible because of the dazzle of the headlights. This does not happen, however, with two independent sensing devices which can manage the internal gains autonomously.

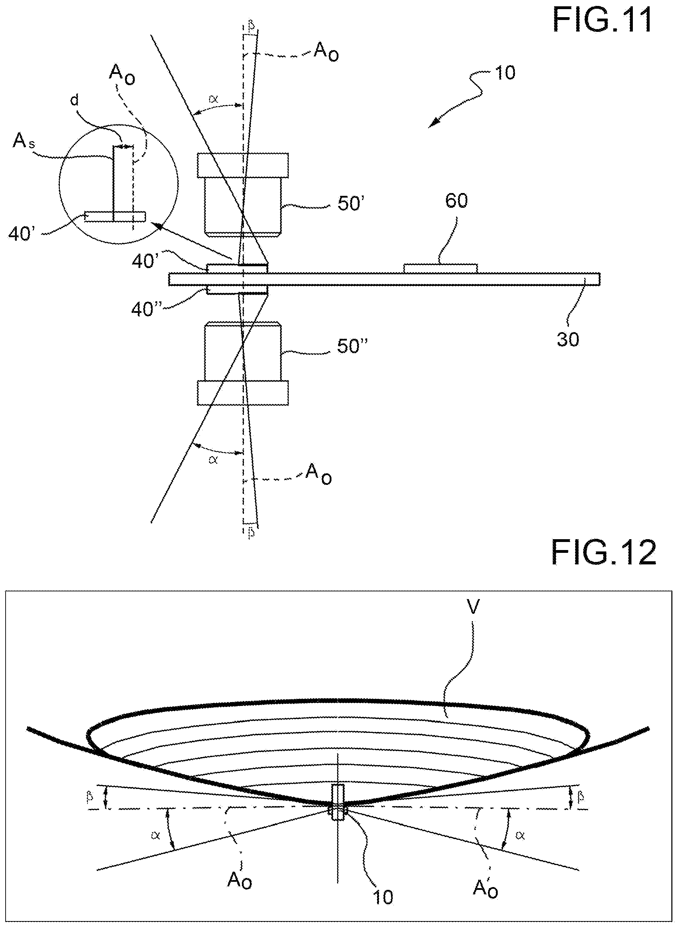

Figures 11 and 12 finally show an alternative embodiment of the shooting arrangement, with particular reference to the arrangement of the sensing devices and of the corresponding optical focussing systems, aimed at obtaining an optimised view of an area of observation at the forefront of the vehicle. In Figure 11, elements or components identical or functionally equivalent to those illustrated in Figures 3 and 4 are indicated by the same reference numerals already used in the description of those preceding figures.

Optimisation was effected from the optical/mechanical point of view by positioning the optical axes A_{O} of the focussing systems 50', 50" non-coaxial with respect to the sensing devices 40', 40". In the preferred embodiment, a distance d=0.181mm is set between the optical axis A_{O} of the focussing systems (shown by dashed lines in the drawing) and the axis of the sensors A_{S} (in solid lines in the enlargement). In this way it is possible to extend the field of view from ß=-2.3° to α=+21.8° with respect to the axis A_{S} of the device. This makes it possible to increase the area in front of the vehicle which can be monitored by the driver. With such a viewing angle the result obtained, for example, is that at 25 m from the vehicle there is a field of view of -1m/10m per side. Still in Figure 11 there is shown in thicker lines the surface area of the sensing devices involved in the acquisition of the images I', I" used in the formation of the composite image I (in fact, the area of interest for assisted viewing on the part of the driver). The negative field of view (i.e. facing in the opposite direction from the main viewing direction) has the purpose of displaying zones to the side of the overall dimensions of the vehicle, for example pavements or pedestrians, and permitting the assumption of environment references with respect to the vehicle itself. For example, it is possible to display a corner of a building directly perceptible by the driver in his own field of view F_{driver}, thus permitting a more correct evaluation of the distances between the vehicle and the significant objects in the surrounding environment.

Owing to this type of configuration of the field of view of the sensor, the light sources in front of the vehicle do not influence the functioning of the system.

Finally, therefore, the integrated system for shooting and presenting areas of observation around a vehicle advantageously comprises a single module which is autonomous in the functions of shooting and processing images, operating on board a vehicle without the need for subsequent external processing. This particular feature permits its easy installation, and also flexibility of interface with a large part of the on-board image display systems currently in use, among which may be cited, for example and without any claim to being an exhaustive list, on-board display panels, navigation apparatus screens, dedicated displays of the infotelematic nodes. Moreover, the autonomous capacity for generating graphic overlays allows the system to be freed from any further computational tasks of additional external processing units.

Moreover, the structure of the module, in particular in its embodiment for the shooting of areas of observation in opposite directions from a position to the front or to the rear of the vehicle permits greater robustness with respect to uncontrollable external phenomena such as natural or artificial dazzle, the presence of areas of non-uniform luminosity, accumulation of dirt on the shooting arrangements (easily exposed to corruption by atmospheric agents as a result of their placing on the vehicle), or mechanical trauma (for example due to sudden stresses or impacts on the vehicle), to mention some examples.

Naturally, the principle of the invention remaining the same, the forms of embodiment and details of construction may be varied widely with respect to those described and illustrated purely by way of non-limiting example, without thereby departing from the scope of protection of the invention defined by the appended claims. This applies in particular with regard to the possibility of using an auxiliary viewing system similar to that which is the subject of the present description for monitoring areas of observation different from those cited by way of example, for example areas to the side or to the rear of the vehicle, or for switching between groups of areas of observation according to the vehicle driving conditions (proceeding in forward or reverse gear, driving at reduced or sustained speed).

## Claims

1. A system for auxiliary viewing of the surroundings of a vehicle, for shooting and simultaneously presenting to the driver scenes in a plurality of areas of observation (Fₗₐₜₑᵣₐₗ) around a vehicle, comprising a shooting arrangement (10) which includes:
- a plurality of image sensing devices (40', 40"), adapted to convert a respective optical beam incident thereon into a plurality of related electrical image signals corresponding to the minimum image elements (pixels);
- a corresponding plurality of optical focussing systems (50', 50"), associated with the sensing devices (40', 40"); and
- image processing means (60) arranged for acquiring the image signals (I₁, I₂) from each sensing device (40', 40") and generating a composite image (I) adapted to the display of scenes shot in the aforesaid areas of observation (Fₗₐₜₑᵣₐₗ) for presentation to the driver via display means (20) installed in the vehicle interior,
wherein
said processing means (60) are arranged for selectively acquiring predetermined image portions (I', I") defined by image signals generated from selected areas of each sensing device (40', 40"), and for combining the acquired image portions (I', I") in juxtaposed positions such as to form an overall image frame (F) for the purpose of generating said composite image (I),
**characterized in that**
said processing means (60) include switching means (100) for the alternate acquisition of the image signals from the sensing devices (40', 40"), according to the frame co-ordinates of the image elements generated by said sensing devices (40',40").

2. An auxiliary viewing system according to claim 1, wherein said processing means (60) include means for coding the acquired images (I', I") into a predetermined video presentation format, supported by said display means (20).

3. An auxiliary viewing system according to claim 1, wherein the shooting arrangement (10) includes printed circuit support means (30) having a pair of image sensing devices (40', 40") disposed on opposed mounting surfaces of a circuit board, so as to shoot, simultaneously, scenes in respective areas of observation of predetermined amplitude in opposite directions of observation, and an image processing module (60) common to said sensing devices (40', 40").

4. An auxiliary viewing system according to claim 3, wherein said processing means (60) are arranged for acquiring from each sensing device (40', 40") a half image (I', I") which represents a portion of the entire scene (I₁, I₂) shot in the area of observation, at the outermost part with respect to the vehicle (V).

5. An auxiliary viewing system according to claim 4, wherein said processing means (60) are arranged for switching the acquisition of the image signals (I', I") from alternate sensing devices (40', 40") according to the comparison between the frame co-ordinate of the image element to be acquired and a switching threshold co-ordinate corresponding to the median co-ordinate of each scanning line of an image frame (F', F").

6. An auxiliary viewing system according to any one of the preceding claims, wherein said optical focussing systems (50', 50") respectively have their optical axis (A_{O}) parallel to, but not coincident with, the median axis of symmetry (A_{S}) of the sensing devices (40', 40").

7. A driving assistance system for a vehicle, comprising an auxiliary viewing system according to claims 1 to 6.

## Patentansprüche

1. System zur Unterstützung der Sicht der Umgebung eines Fahrzeugs, das Szenen in einer Vielzahl von Beobachtungsbereichen (Fₗₐₜₑᵣₐₗ) um ein Fahrzeug herum aufnimmt und sie gleichzeitig dem Fahrer anzeigt, eine Aufnahmeanordnung (10) aufweisend, die besitzt:
- eine Vielzahl von Bilderfassungsvorrichtungen (40', 40"), die gestaltet sind, um einen jeweils darauf fallenden optischen Strahl in eine Vielzahl zugehöriger elektrischer Bildsignale entsprechend der Mindestzahl der Bildelemente (Pixel) umzuwandeln;
- eine entsprechende Vielzahl optischer Fokussiersysteme (50', 50"), die mit den Erfassungsvorrichtungen (40', 40") in Beziehung stehen; und
- ein Bildverarbeitungsmittel (60), das angeordnet ist, um die Bildsignale (I₁, I₂) von jeder einzelnen Erfassungsvorrichtung (40', 40 ") zu gewinnen und ein zusammengesetztes Bild (I) zu erzeugen, das für die Darstellung von in den vorgenannten Beobachtungsbereichen (Fₗₐₜₑᵣₐₗ) aufgenommenen Szenen gestaltet ist, um sie über ein im Inneren des Fahrzeugs installiertes Darstellungsmittel (20) dem Fahrer anzuzeigen,
wobei
das Verarbeitungsmittel (60) angeordnet ist, um vorgegebene Bildabschnitte (I', I"), die durch von ausgewählten Bereichen jeder einzelnen
Erfassungsvorrichtung (40', 40") erzeugte Bildsignale festgelegt sind, gezielt zu gewinnen und um die gewonnenen Bildabschnitte (I', I") in Nebeneinanderstellungen so zu kombinieren, dass ein einzelnes Gesamtbild (F) zum Zweck der Erzeugung des zusammengesetzten Bildes (I) entsteht,
**dadurch gekennzeichnet, dass** das Verarbeitungsmittel (60) ein Schaltmittel (100) für die abwechselnde Gewinnung der Bildsignale von den Erfassungsvorrichtungen (40', 40") gemäß den Einzelbildkoordinaten der Bildelemente, die von den Erfassungsvorrichtungen (40', 40") erzeugt werden, besitzt.

2. System zur Unterstützung der Sicht nach Anspruch 1, wobei das Verarbeitungsmittel (60) Mittel zum Codieren der gewonnenen Bilder (I', I") in ein vorgegebenes, vom Darstellungsmittel (20) unterstütztes Videoanzeigeformat besitzt.

3. System zur Unterstützung der Sicht nach Anspruch 1, wobei die Aufnahmeanordnung (10) ein Druckschaltkreis-Haltemittel (30) mit einem Paar
Bilderfassungsvorrichtungen (40', 40"), die auf gegenüberliegenden Montageoberflächen eines Schaltkreises angeordnet sind, um gleichzeitig Szenen in jeweiligen Beobachtungsbereichen einer vorgegebenen Amplitude in gegenüberliegenden Beobachtungsrichtungen aufzunehmen, und ein den Erfassungsvorrichtungen (40', 40") gemeinsames Bildverarbeitungsmodul (60) besitzt.

4. System zur Unterstützung der Sicht nach Anspruch 3, wobei das Verarbeitungsmittel (60) angeordnet ist, um von jeder einzelnen Erfassungsvorrichtung (40', 40") ein Halbbild (I', I"), das einen, bezogen auf das Fahrzeug (V), am weitesten außen liegenden Abschnitt der im Beobachtungsbereich aufgenommenen gesamten Szene (I₁, I₂) darstellt, zu gewinnen.

5. System zur Unterstützung der Sicht nach Anspruch 4, wobei das Verarbeitungsmittel (60) angeordnet ist, um die Gewinnung der Bildsignale (I', I") von abwechselnden Erfassungsvorrichtungen (40', 40") abhängig vom Vergleich zwischen der Einzelbildkoordinate des zu gewinnenden Bildelements und einer Schaltschwellenkoordinate entsprechend der Zentralkoordinate jeder Abtastzeile eines Einzelbildes (F', F") zu schalten.

6. System zur Unterstützung der Sicht nach einem der vorangegangenen Ansprüche, wobei die optische Achse (A_{O}) der optischen Fokussiersysteme (50', 50") jeweils parallel zur Zentralsymmetrieachse (A_{S}) der Erfassungsvorrichtungen (40', 40") verläuft, aber nicht mit dieser zusammenfällt.

7. Fahrassistenzsystem für ein Fahrzeug, ein System zur Unterstützung der Sicht nach den Ansprüchen 1 bis 6 aufweisend.

## Revendications

1. Système de visualisation auxiliaire des abords d'un véhicule, destiné à acquérir et à présenter simultanément au conducteur des scènes dans plusieurs zones d'observation (Fₗₐₜₑᵣₐₗ) autour d'un véhicule, comprenant un dispositif de prise de vues (10) qui comporte :
- plusieurs dispositifs d'acquisition d'images (40', 40") adaptés pour convertir un faisceau optique respectif qui les touche en plusieurs signaux électriques d'image correspondant aux plus petits éléments d'image (pixels) ;
- un nombre correspondant de systèmes de mise au point optique (50', 50") associés aux dispositifs d'acquisition (40', 40") ; et
- des moyens de traitement d'image (60) conçus pour acquérir les signaux d'image (I₁, I₂) provenant de chaque dispositif d'acquisition (40', 40") et pour générer une image composite (I) adaptée à la visualisation de scènes acquises dans lesdites zones d'observation (Fₗₐₜₑᵣₐₗ) en vue de leur présentation au conducteur par des moyens d'affichage (20) installés à l'intérieur du véhicule,
dans lequel lesdits moyens de traitement (60) sont conçus pour acquérir sélectivement des parties d'image prédéterminées (I', I") définies par des signaux d'image générés à partir de zones choisies de chaque dispositif d'acquisition (40', 40") et pour combiner les parties d'image (I', I") acquises dans des positions juxtaposées pour former une trame d'image d'ensemble (F) afin de générer ladite image composite (I),
**caractérisé en ce que** lesdits moyens de traitement (60) comprennent des moyens de commutation (100) pour l'acquisition alternée des signaux d'image des dispositifs d'acquisition (40', 40"), selon les coordonnées dans la trame des éléments d'image générés par lesdits dispositifs d'acquisition (40',40").

2. Système de visualisation auxiliaire selon la revendication 1, dans lequel lesdits moyens de traitement (60) comprennent des moyens pour coder les images acquises (I', I") sous un format de présentation vidéo prédéterminé, pris en charge par lesdits moyens d'affichage (20).

3. Système de visualisation auxiliaire selon la revendication 1, dans lequel le dispositif de prise de vues (10) comprend des moyens de support de circuits imprimés (30) possédant une paire de dispositifs d'acquisition d'images (40', 40") disposés sur des surfaces opposées d'une carte de circuits afin d'acquérir simultanément des scènes dans des zones d'observation respectives d'amplitude prédéterminée dans des directions d'observation opposées, et un module de traitement d'image (60) commun auxdits dispositifs d'acquisition (40', 40").

4. Système de visualisation auxiliaire selon la revendication 3, dans lequel lesdits moyens de traitement (60) sont conçus pour acquérir auprès de chaque dispositif d'acquisition (40', 40") une moitié d'image (I', I") représentant une partie de la scène entière (I₁, I₂) acquise dans la zone d'observation, dans la partie la plus extérieure par rapport au véhicule (V).

5. Système de visualisation auxiliaire selon la revendication 4, dans lequel lesdits moyens de traitement (60) sont disposés pour commuter l'acquisition des signaux d'image (I', I") à partir de dispositifs d'acquisition (40', 40") alternés suivant la comparaison entre la coordonnée dans la trame de l'élément d'image à acquérir et une coordonnée de seuil de commutation correspondant à la coordonnée médiane de chaque ligne de balayage d'une trame d'image (F', F").

6. Système de visualisation auxiliaire selon l'une quelconque des revendications précédentes, dans lequel l'axe optique (A_{O}) respectif desdits systèmes de mise au point optique (50', 50") est parallèle à l'axe de symétrie (A_{S}) des dispositifs d'acquisition (40', 40") sans coïncider avec celui-ci.

7. Système d'assistance à la conduite pour un véhicule, comprenant un système de visualisation auxiliaire selon les revendications 1 à 6.
